# EUROPÄISCHE PATENTSCHRIFT

(11) **EP 3 523 009 B1**
(45) Veröffentlichungstag und Bekanntmachung des Hinweises auf die Patenterteilung: **22.07.2020**
(21) Anmeldenummer: 17784606.0
(22) Anmeldetag: 06.10.2017
(51) Int. Cl.: B01D 45/08, B05B 15/00

(54) **ABSCHEIDEMODUL ZUM ABSCHEIDEN VON OVERSPRAY**
SEPARATION MODULE FOR SEPARATING OVERSPRAY
MODULE DE SÉPARATION SERVANT À SÉPARER UN EXCÈS DE PROJECTION

(30) Priorität: 07.10.2016 DE 202016105618 U
(43) Veröffentlichungstag der Anmeldung: 14.08.2019
(73) Patentinhaber: Neumann, Jens, 48455 Bad Bentheim (DE)
(72) Erfinder: Neumann, Jens, 48455 Bad Bentheim (DE)
(74) Vertreter: Werner & ten Brink
(86) Internationale Anmeldenummer: PCT/EP2017/075439
(87) Internationale Veröffentlichungsnummer: WO 2018/065561

(56) Entgegenhaltungen:
- WO-A1-2015/154108
- WO-A2-03/084638
- WO-A2-2004/056448
- DE-A1-102008 021 225
- DE-A1-102014 003 608
- US-A- 5 500 271
- US-A1- 2002 083 692

## Beschreibung

Die Erfindung betrifft eine Vorrichtung zum Abscheiden von sogenanntem Overspray sowie einen in einer solchen Vorrichtung verwendbaren Abscheider. Bei Overspray handelt es sich bekanntlich um den Anteil eines bei Spritz- und Sprühapplikationen verspritzten Materials, zum Beispiel Lack und dergleichen, welcher nicht auf ein jeweiliges Werkstück, Objekt oder dergleichen gelangt, sondern in Form von Sprühnebel in die Umgebung entweicht. Konkret betrifft die Erfindung eine Vorrichtung zum Abscheiden von Overspray aus einer mit Overspray beladenen Kabinenluft (Rohgas) von Beschichtungsanlagen, insbesondere Lackieranlagen. Dort wird bekanntlich der Overspray von einem Luftstrom aufgenommen und zu einer als Vorrichtung zum Abscheiden von Overspray fungierenden Abscheidevorrichtung geführt (der Begriff "Abscheidevorrichtung" wird im Folgenden mitunter als Kurzform für "Vorrichtung zum Abscheiden von sogenanntem Overspray" verwendet). Die Abscheidevorrichtung nimmt aus dem Luftstrom (Rohgasstrom) einen Teil, optimalerweise einen Großteil, der von diesem in Form von Overspray mitgeführten Feststoffe (Lackpartikel, Pigmente, Füllstoffe usw.) und/oder Tröpfchen (flüssige Lackanteile in Form von Lösungsmitteln, Füllstoffen, Bindemitteln usw.) auf. Für eine solche Abscheidung von Overspray aus dem durch die Abscheidevorrichtung hindurchgeleiteten Luftstrom umfasst die Abscheidevorrichtung zumindest ein Modul oder mehrere Module, die im Folgenden vereinfachend als Abscheidemodule bezeichnet werden, auch wenn diese im Einzelfall nicht nur abscheidend, sondern zum Beispiel auch filtrierend wirksam sind.

Eine Aufgabe der im Folgenden beschriebenen Neuerung besteht darin, eine weitere Ausführungsform eines in einer Abscheidevorrichtung verwendbaren Abscheidemoduls anzugeben.

Diese Aufgabe wird erfindungsgemäß mittels eines Abscheidemoduls zum Abscheiden von Overspray mit den Merkmalen des Anspruchs 1 gelöst. Danach zeichnet sich das Abscheidemodul durch eine gestufte Oberflächenstruktur aus, wobei bei der gestuften Oberflächenstruktur zu jeder Stufe jeweils eine horizontale oder im Wesentlichen horizontale Fläche gehört und wobei an die horizontalen Flächen jeweils zumindest eine vertikale oder im Wesentlichen vertikale Fläche angrenzt. Eine zwischen zwei horizontalen Flächen befindliche vertikale Fläche weist zumindest eine Öffnung zum Eintritt eines mit Overspray beladenen Rohgasstroms in das Innere des Abscheidemoduls auf. Im Anschluss an eine mit zumindest einer Öffnung versehene vertikale Fläche weist das Abscheidemodul im Innern unter einzelnen horizontalen Flächen vertikale Kanäle auf, wobei zumindest einzelne Kanäle eine Mehrzahl von durch Trennflächen mit einer progressiven Struktur separierte Kammern umfassen.

Die Besonderheit der hier vorgeschlagenen Neuerung besteht in der gestuften Oberflächenstruktur, also einer gestuften Struktur einer im Betrieb einem mit Overspray beladenen Luftstrom zugewandten Außenoberfläche, und den Kanälen unter zumindest einzelnen Stufen. Die gestufte Oberflächenstruktur erlaubt eine weitgehend gleichmäßige Beladung des Abscheidemoduls "in der Fläche". Die Kanäle im Innern des Abscheidemoduls erlauben eine weitgehend gleichmäßige Beladung "in der Tiefe". Ein Abscheidemodul der hier vorgeschlagenen Art zeichnet sich demnach durch eine hervorragende Abscheideleistung und eine damit einhergehende hohe Standzeit aus.

Dabei weist das Abscheidemodul jeweils eine mit zumindest einer Öffnung versehene vertikale Fläche auf mehreren zu jeweils einer Stufe gehörenden Ebenen auf. Jede derartige vertikale Fläche erlaubt aufgrund der zumindest einen Öffnung darin einen Zustrom des mit Overspray beladenen Rohgases in einen hinter und unter einer solchen Fläche anschließenden Kanal im Innern des Abscheidemoduls. Dort findet die eigentliche Abscheidung des Oversprays statt.

Des Weiteren weist das Abscheidemodul zumindest einen ersten und einen zweiten in seiner Grundfläche ringförmigen Kanal auf, wobei der erste und der zweite Kanal einen gemeinsamen Mittelpunkt einschließen, wobei zum ersten und zum zweiten Kanal jeweils eine den Kanal in Anströmrichtung begrenzende horizontale Fläche gehört und wobei die horizontale Fläche des ersten Kanals und die horizontale Fläche des zweiten Kanals zu unterschiedlichen Stufen der gestuften Oberflächenstruktur gehören.

Aus der DE 10 2008 021 225 A1 ist ein Filtermodul mit mehreren zickzackförmig gefalteten Ebenen bekannt. Die Zickzackform verleiht der nach außen gewandten Oberfläche zwar eine dreidimensionale Struktur. Diese ist aber keine gestufte Oberflächenstruktur im Sinne der vorangehenden und nachfolgenden Erläuterungen.

Die WO 2015/154108 A1 beschreibt ein Reinigungssystem für Lackpartikel, bei dem in einen Karton Abscheidestrukturen eingesetzt werden, wobei ein anströmender Rohgasstrom zuerst auf die vordere Abscheidestruktur in dem Karton und deren ebene Oberfläche auftrifft, und folglich angesichts der ebenen Oberfläche ebenfalls keine gestufte Oberflächenstruktur im Sinne der vorangehenden und nachfolgenden Erläuterungen vorliegt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Abscheidemoduls nicht vorhanden ist. Jede Bezugnahme in der Beschreibung auf Aspekte nachgeordneter Ansprüche ist demnach auch ohne speziellen Hinweis ausdrücklich als Beschreibung bevorzugter, aber optionaler Merkmale zu lesen.

Bei einer Ausführungsform weist das Abscheidemodul mehrere Stufen mit jeweils umlaufenden vertikalen Flächen auf, wobei jede dieser vertikalen Flächen jeweils mit zumindest einer Öffnung zum Innern des Abscheidemoduls versehen ist. Die Anzahl der Stufen bestimmt die Verteilung der jeweils "ringförmigen" Kanäle über die Bodenfläche des Abscheidemoduls und eine gewisse Stufenanzahl, zum Beispiel drei, vier, fünf, sechs oder mehr Stufen, gewährleistet die bereits erwähnte gleichmäßige Beladung des Abscheidemoduls "in der Fläche".

Bei einer weiteren Ausführungsform eines solchen Abscheidemoduls sind zumindest einzelne Kanäle im Innern des Abscheidemoduls gegen benachbarte, angrenzende Kanäle mittels geschlossener, für den durch einen Kanal strömenden und mit Overspray beladenen Rohgasstrom undurchlässiger vertikaler Grenzflächen abgegrenzt.

Bei einer nochmals weiteren Ausführungsform des Abscheidemoduls umfasst dieses ein die gestufte Oberflächenstruktur bildendes Innenteil und ein das Innenteil rahmenartig einfassendes Außenteil. Ein solches Innenteil ist das, was bisher als Abscheidemodul beschrieben wurde. Das Innenteil umfasst die horizontalen Flächen, die vertikalen Flächen und die Trennflächen sowie die vertikalen Grenzflächen und ist zum Beispiel aus Pappe, insbesondere Wellpappe, gefertigt. Das Außenteil kann ebenfalls aus Pappe, insbesondere Wellpappe, gefertigt sein.

Ein Abscheidemodul der hier vorgeschlagenen Art oder ein Innenteil eines solchen Abscheidemoduls ist bevorzugt in einer faltbaren und beim Auffalten selbstaufstellenden Form ausgeführt.

Die gestufte Oberflächenstruktur eines Abscheidemoduls der hier vorgeschlagenen Art oder eines Innenteils eines solchen Abscheidemoduls resultiert zum Beispiel aufgrund einer Ausführung in Form einer Stufenpyramide oder in Form einer inversen Stufenpyramide.

Die mit der Anmeldung eingereichten Ansprüche sind Formulierungsvorschläge ohne Präjudiz für den Erhalt eines weiter reichenden Schutzumfangs. Da speziell die Gegenstände der Unteransprüche im Hinblick auf den Stand der Technik am Prioritätstag eigene und unabhängige Erfindungen bilden können, behält der Anmelder sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

Es zeigen
- Fig. 1: eine isometrische Ansicht einer Ausführungsform eines Abscheidemoduls der hier vorgeschlagenen Art,
- Fig. 2: eine isometrische Ansicht einer weiteren Ausführungsform eines Abscheidemoduls der hier vorgeschlagenen Art,
- Fig. 3: und
- Fig. 4: Schnittansichten eines Abscheidemoduls gemäß Fig. 1 bzw. Fig. 2,
- Fig. 5: eine Schnittansicht eines in der Beschreibung als Kanal bezeichneten Abschnitts eines Abscheidemoduls gemäß Fig. 1 und Fig. 3,
- Fig. 6: eine Draufsicht auf unterschiedliche Trennflächen in einem Kanal,
- Fig. 7: und
- Fig. 8: eine Draufsicht auf ein Abscheidemodul gemäß Fig. 1 bzw. Fig. 2,

- Fig. 9: und
- Fig. 10: die sukzessive Beladung eines Abscheidemoduls der hier vorgeschlagenen Art mit aus einem Rohgasstrom abgeschiedenem Overspray zum einen in der Fläche (Fig. 9) und zum anderen in der Tiefe (Fig. 10),
- Fig. 11: und
- Fig. 12: Seitenansichten eines Segments des Abscheidemoduls gemäß Fig. 2 und Momentaufnahmen des Segments in gebrauchsfähiger Konfiguration sowie beim Zusammenfalten,
- Fig 13: eine dreidimensionale Darstellung einer Hälfte eines Abscheidemoduls gemäß Fig. 2 mit Momentaufnahmen beim Zusammenlegen des Abscheidemoduls und beim Zusammenfalten der Segmente des Abscheidemoduls,
- Fig. 14, Fig. 15, Fig. 16: und
- Fig. 17: weitere Ausführungsformen eines Abscheidemoduls.

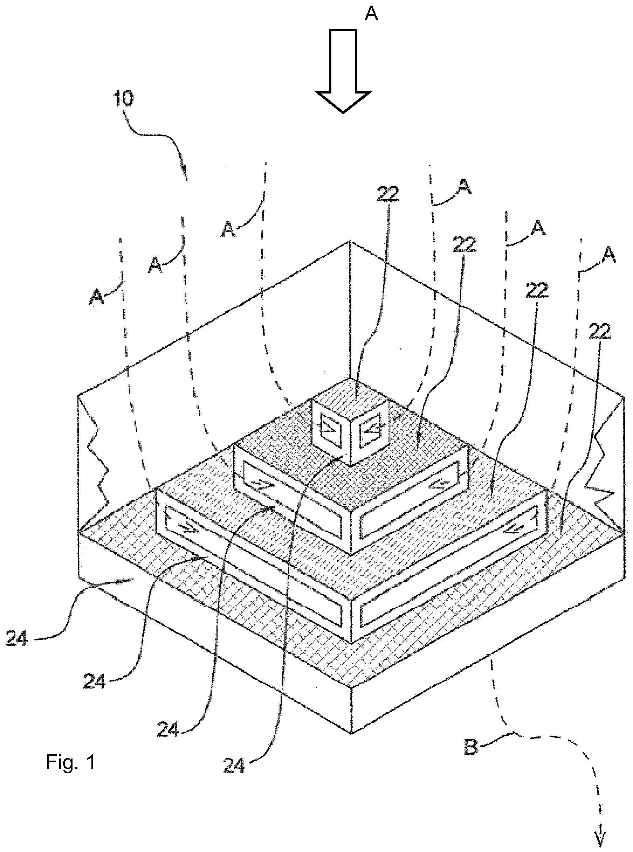

Die Darstellung in Figur 1 zeigt in schematisch vereinfachter Form eine isometrische Ansicht einer Ausführungsform eines Abscheidemoduls 10 der hier vorgeschlagenen Art. Auffällig ist die gestufte Form (gestufte Oberflächenstruktur) des Abscheidemoduls 10. Diese Form wird im Folgenden - in Anlehnung an die sogenannten Stufenpyramiden - als Pyramidenform bezeichnet.

Im Interesse einer besseren Lesbarkeit der hier vorgelegten Beschreibung gilt Folgendes: Begriffe wie "oben", "unten", "höher", "tiefer" usw. beziehen sich auf einen mit abzuscheidendem Overspray oder dergleichen beladenen Rohgasstrom. Die Richtung des Rohgasstroms A ist in einzelnen Figuren zum Beispiel in Form eines Blockpfeils illustriert (mit B ist der stromabwärts des Abscheidemoduls 10 austretende Luftstrom bezeichnet). Als gestufte Oberflächenstruktur wird die gestufte Struktur der im Betrieb dem Rohgasstrom A zugewandten Außenoberfläche des Abscheidemoduls 10 verstanden. Eine "horizontale Fläche" ist eine Fläche, die zu einer Hauptströmungsrichtung des Rohgasstroms A senkrecht oder im Wesentlichen senkrecht steht oder auf welche die Hauptströmungsrichtung des Rohgasstroms A senkrecht oder im Wesentlichen senkrecht auftrifft. Eine "vertikale Fläche" ist in diesem Sinne eine Fläche, die parallel oder zumindest im Wesentlichen parallel zur Hauptströmungsrichtung des anströmenden Rohgasstroms A verläuft. Begriffe wie "horizontal", "vertikal" oder dergleichen haben also nichts mit einer im eingebauten Zustand resultierenden Orientierung zu tun. Im Übrigen sind im eingebauten Zustand vielfältige Orientierungen des Abscheidemoduls 10 denkbar, so dass der Bezug auf die Hauptströmungsrichtung des Rohgasstroms A die notwendige Unabhängigkeit von einer im Voraus nicht bekannten Einbausituation und einer daraus resultierenden Orientierung des Abscheidemoduls 10 eröffnet.

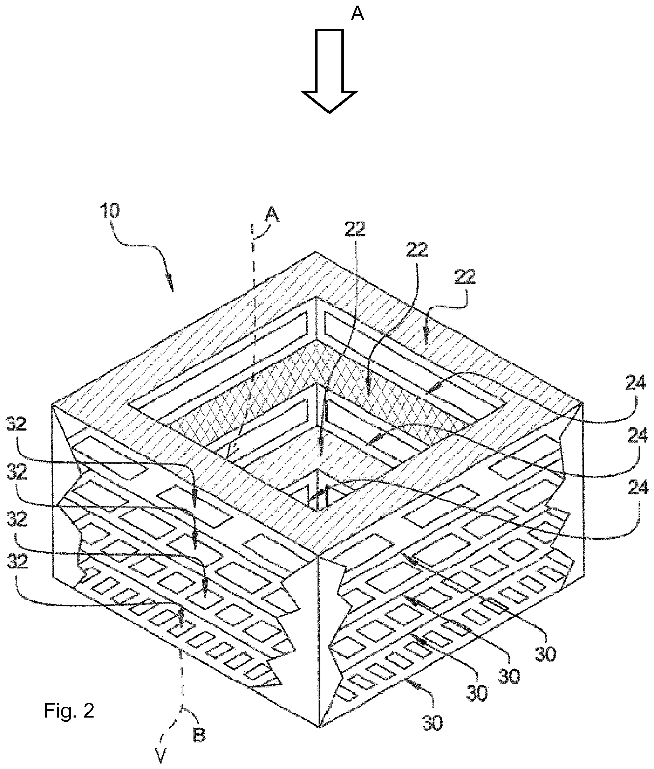

Die Darstellung in Figur 2 zeigt in ebenfalls schematisch vereinfachter Form eine isometrische Ansicht einer weiteren Ausführungsform eines Abscheidemoduls 10 der hier vorgeschlagenen Art. Die Form des Abscheidemoduls 10 gemäß Figur 2 hat die Form einer "inversen Pyramide". Während das Abscheidemodul 10 gemäß Figur 1 eine Mehrzahl von Ebenen aufweist, die jeweils konzentrisch zur darunter liegenden Ebene angeordnet sind und deren in Richtung auf den anströmenden Rohgasstrom A gewandte Flächen sukzessive kleiner werden, sind die Verhältnisse bei dem Abscheidemodul 10 gemäß Figur 2 umgekehrt. Dort ist die oberste Ebene ein "Ring" mit vier geraden Seitenstücken und bei jeder tiefer liegenden Ebene kommt eine sukzessive weiter nach innen (zum Zentrum des "Rings") verspringende Stufe mit einer zunehmend kleineren Oberfläche hinzu. Auch hier ergibt sich die gestufte Oberflächenstruktur aufgrund der gestuften Struktur der im Betrieb dem Rohgasstrom A zugewandten Außenoberfläche.

Beiden Formen ist aber gemein, dass die angeströmte Fläche jeder Ebene von Ebene zu Ebene kleiner wird. Bei der Ausführungsform gemäß Figur 1 gilt dies "von unten nach oben". Bei der Ausführungsform gemäß Figur 2 gilt dies "von oben nach unten". Bei dem Abscheidemodul 10 gemäß Figur 1 liegt die Ebene mit der kleinsten Fläche oben (= stromaufwärts aller anderen Ebenen) und der anströmende Rohgasstrom A trifft zuerst auf die Ebene mit der kleinsten Fläche. Bei dem Abscheidemodul 10 gemäß Figur 2 liegt die Ebene mit der kleinsten Fläche unten (= stromabwärts aller anderen Ebenen) und der anströmende Rohgasstrom A trifft zuletzt auf die Ebene mit der kleinsten Fläche. Wie im Folgenden weiter erläutert wird, ist der Zeitpunkt, zu dem der Rohgasstrom A auf einen bestimmten Bereich des Abscheidemoduls 10 trifft, für dessen Funktion ohne besondere Bedeutung. Die Erwähnung, auf welchen Bereich der Rohgasstrom A jeweils zuerst trifft, dient hier nur zur Verdeutlichung der unterschiedlichen Formen des Abscheidemoduls 10.

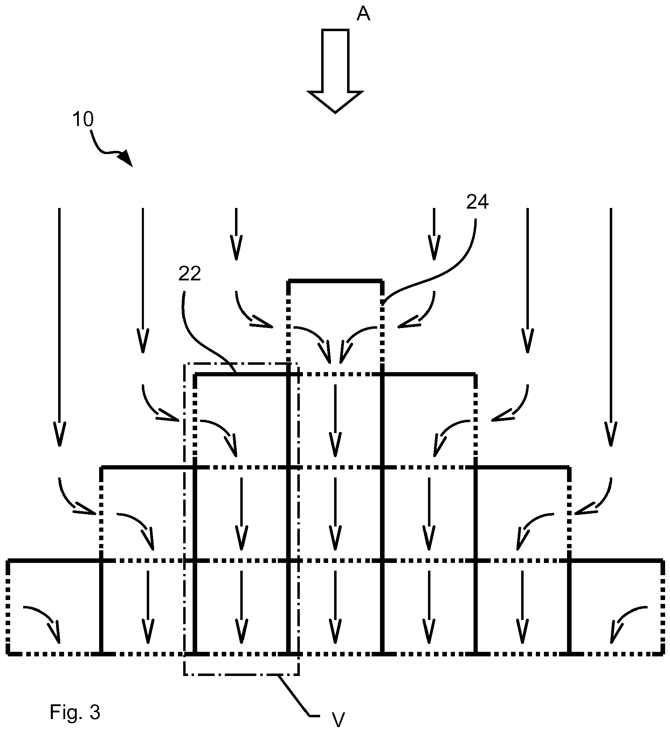

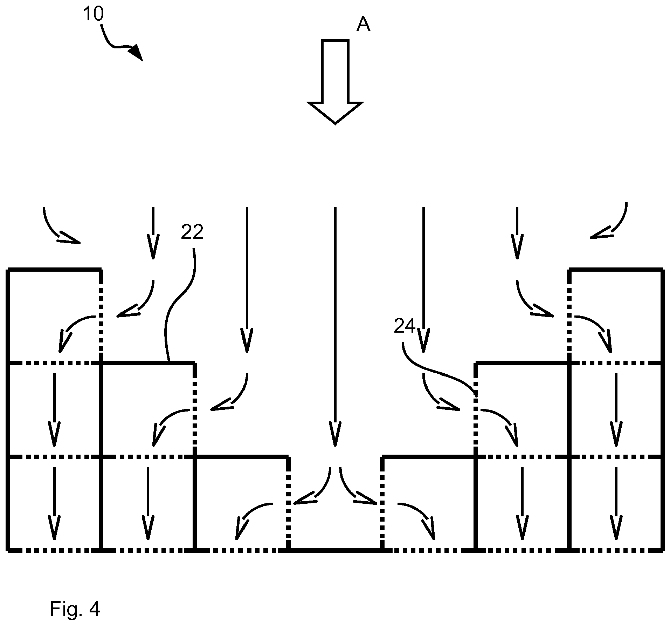

Zur besseren Veranschaulichung zeigen die Darstellungen in Figur 3 und Figur 4 einen schematisch vereinfachten Schnitt durch das Abscheidemodul 10 gemäß Figur 1 bzw. Figur 2 mit einer Schnittebene parallel zur Hauptrichtung des Rohgasstroms A und entlang der mit der Hauptrichtung des Rohgasstroms A zusammenfallenden Längs- und Symmetrieachse des jeweiligen Abscheidemoduls 10. In den Schnittdarstellungen sind die Pyramidenform des Abscheidemoduls 10 gemäß Figur 1 (Figur 3) und die inverse Pyramide des Abscheidemoduls 10 gemäß Figur 2 (Figur 4) besonders gut erkennbar.

Das Abscheidemodul 10 umfasst eine Mehrzahl von jeweils außen liegenden (anströmbaren und im Betrieb angeströmten) horizontalen Flächen 22 sowie eine Mehrzahl von ebenfalls außen liegenden, durchströmbaren und im Betrieb zumindest zeitweise durchströmten vertikalen Flächen 24, wobei in den Darstellungen im Interesse der Übersicht nur einzelne dieser Flächen 22, 24 bezeichnet sind. Die (außen liegenden) horizontalen und vertikalen Flächen 22, 24 bilden die gestufte Oberflächenstruktur des Abscheidemoduls 10. Zu jeder Stufe gehört jeweils eine horizontale Fläche 22 und an die horizontalen Flächen 22 grenzt jeweils zumindest eine vertikale Fläche 24 an ("unten" oder "oben"). Bei einzelnen horizontalen Flächen 22 grenzen an diese zwei vertikale Flächen 24 an ("unten" und "oben"). Die angeströmten horizontalen Flächen 22 des Abscheidemoduls 10 sind geschlossen. Die vertikalen Flächen 24 erlauben einen Eintritt des anströmenden Rohgasstroms A in das Innere des Abscheidemoduls 10. Die vertikalen Flächen 24 weisen insoweit jeweils zumindest eine Öffnung auf. In den Darstellungen ist diese mittels punktierter Linien gezeigt.

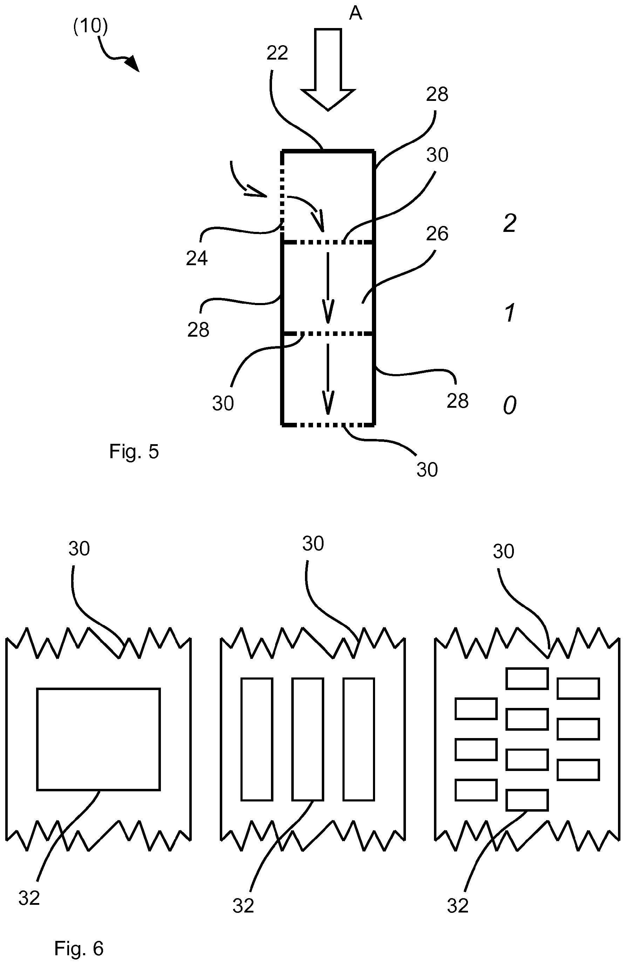

Die alternierende Anordnung von geschlossenen (horizontalen) und offenen (vertikalen) Flächen 22, 24 führt zu einer Umlenkung des Rohgasstroms A beim Auftreffen auf das Abscheidemodul 10. Dabei handelt es sich um eine alternierende Anordnung von geschlossenen und offenen Flächen 22, 24 in dem Sinne, dass an eine geschlossene horizontale Fläche 22 in einer nächsttieferen Ebene eine offene vertikale Fläche 24 anschließt. Grundsätzlich kommt auch eine Ausführungsform mit Öffnungen aufweisenden angeströmten horizontalen Flächen 22 in Betracht. Im Anschluss an eine mit zumindest einer Öffnung versehene vertikale Fläche 24 weist das Abscheidemodul 10 im Innern unter einzelnen horizontalen Flächen 22 vertikale Kanäle 26 (Fig. 5) auf, wobei zumindest einzelne Kanäle 26 eine Mehrzahl von durch Trennflächen 30 (Fig. 5) mit einer progressiven Struktur separierte Kammern umfassen.

In den Schnittdarstellungen erscheinen die Kammern einer einzelnen Ebene als Würfel. Bei dem Abscheidemodul 10 gemäß Figur 3 und Figur 1 befindet sich ganz oben eine einzelne Kammer. Darunter befindet sich eine Ebene, bei der die drei davon umfassten Kammern in der Schnittdarstellung als eine Nebeneinanderplatzierung dreier "Würfel" erscheinen. Die komplette Ebene umfasst das Volumen neun solcher gedachter Würfel. Die nächsttiefere Ebene umfasst fünf Kammern und erscheint in der Schnittdarstellung als eine Nebeneinanderplatzierung von fünf Würfeln, wobei die komplette Ebene das Volumen von fünfundzwanzig solcher gedachten Würfel umfasst. Je nach Größe des Abscheidemoduls 10 setzt sich dieser Aufbau sukzessive in den tiefer liegenden Ebenen fort. Für das Abscheidemodul 10 gemäß Figur 4 und Figur 2 gilt dies entsprechend, wobei die Anzahl der "Würfel"/Kammern - kurz gefasst - ausgehend von den Rändern in Richtung auf das Zentrum abnimmt.

In der Darstellung in Figur 5 ist als Basis für die weitere Beschreibung eine vertikale Abfolge einzelner solcher "Würfel"/Kammern gezeigt und zwar die in Figur 3 mit der mit V bezeichneten Rahmenlinie zusammengefassten Kammern. Danach bilden übereinanderliegende Kammern aufeinander folgender Ebenen des Abscheidemoduls 10 im Innern des Abscheidemoduls 10 einen Kanal 26 und zwar einen Kanal 26 im Anschluss an eine mit zumindest einer Öffnung versehene vertikale Fläche 24 und unter einer oben an die vertikale Fläche 24 angrenzenden horizontalen Fläche 22. Der Kanal 26 weist innere vertikale Grenzflächen 28 auf, insbesondere geschlossene innere vertikale Grenzflächen 28. Optional können benachbarte Kanäle 26 oder einzelne benachbarte Kanäle 26 auch miteinander gekoppelt sein. Dann weisen zumindest einzelne vertikale Grenzflächen 28 Öffnungen auf, welchen den Kanal 26 zu einem benachbarten Kanal 26 öffnen.

Im Kanal 26 befinden sich zwischen den einzelnen Ebenen (in der Darstellung in Figur 5 entsprechend der Anzahl der in Figur 3 gezeigten Ebenen mit "0" für die unterste Ebene, "1" für die unmittelbar darüber liegende Ebene und "2" für die wiederum darüber liegende Ebene bezeichnet) und am Boden der untersten Ebene jeweils eine ebene (horizontale) Trennfläche 30. Im Innern des Abscheidemoduls 10 befindet sich eine Mehrzahl solcher Kanäle 26, mit einer von Stufe zu Stufe unterschiedlichen Tiefe und entsprechend einer von Stufe zu Stufe unterschiedlichen Anzahl von Kammern sowie entsprechend einer von Stufe zu Stufe unterschiedlichen Anzahl von Trennflächen 30.

Der auf die unmittelbar angeströmte (äußere) horizontale Fläche 22 auftreffende Rohgasstrom A wird umgelenkt, tritt über die offene (äußere) vertikale Fläche 24 in den jeweiligen Kanal 26 ein und wird dabei nochmals umgelenkt. Dies führt bereits zu einer erheblichen, für die Abscheidung von mit dem Rohgasstrom A mitgeführtem Overspray günstigen Verwirbelung des Rohgasstroms A. Die Trennflächen 30 innerhalb des Kanals 26 erlauben einen Durchtritt des (in den Kanal 26 umgelenkten) Rohgasstroms A und weisen dafür Öffnungen 32 (Figur 6) auf. In der jeweiligen Trennfläche 30 ergibt sich aufgrund der Anzahl und der Größe, ggf. auch der Form der Öffnungen 32 ein jeweiliges Lochbild. Bei einem Kanal 26 mit mindestens zwei Ebenen bilden innere vertikale Grenzflächen 28 die Grenze zu einem innerhalb des Abscheidemoduls 10 benachbarten Kanal 26 mit einer geringeren Ebenenanzahl und den einzelnen dortigen Ebenen (in Figur 5 zwei innere vertikale Grenzflächen 28 auf der linken Seite) sowie einem ggf. benachbarten Kanal 26 mit einer höheren Ebenenanzahl und den einzelnen dortigen Ebenen (in Figur 5 drei innere vertikale Grenzflächen 28 der rechten Seite).

Bei einer Ausführungsform mit Öffnungen in den Grenzflächen 28, welche den jeweiligen Kanal 26 zu zumindest einem angrenzenden Kanal 26 oder zu beiden angrenzenden Kanälen 26 öffnen, ergibt sich ein insgesamt geringerer Strömungswiderstand des Abscheidemoduls 10. Zudem besteht aufgrund der dann gegebenen Verbindung zwischen benachbarten Kanälen 26 gewissermaßen eine Ausweichmöglichkeit für den Rohgasstrom A im Innern des Abscheidemoduls 10, wenn die zur Abscheidung wirksamen Flächen, insbesondere die oder jede Trennfläche 30, eines Kanals 26 bereits stark beladen (mit Overspray belegt) ist, während in dem benachbarten Kanal 26 noch eine geringere Beladung gegeben ist.

Die Darstellung in Figur 6 zeigt schematisch vereinfacht von links nach rechts die drei Trennflächen 30 aus Figur 5 in einer Draufsicht und damit ein mögliches (exemplarisches) Lochbild der einzelnen Trennflächen 30. Die Darstellung in Figur 6 soll eine im Folgenden als progressive Struktur bezeichnete Abfolge von Öffnungen 32 (nicht alle bezeichnet in Figur 6) in den Trennflächen 30 veranschaulichen. Zumindest einzelne Kanäle 26 des Abscheidemoduls 10 umfassen demnach eine Mehrzahl von durch Trennflächen 30 mit einer progressiven Struktur separierte Kammern.

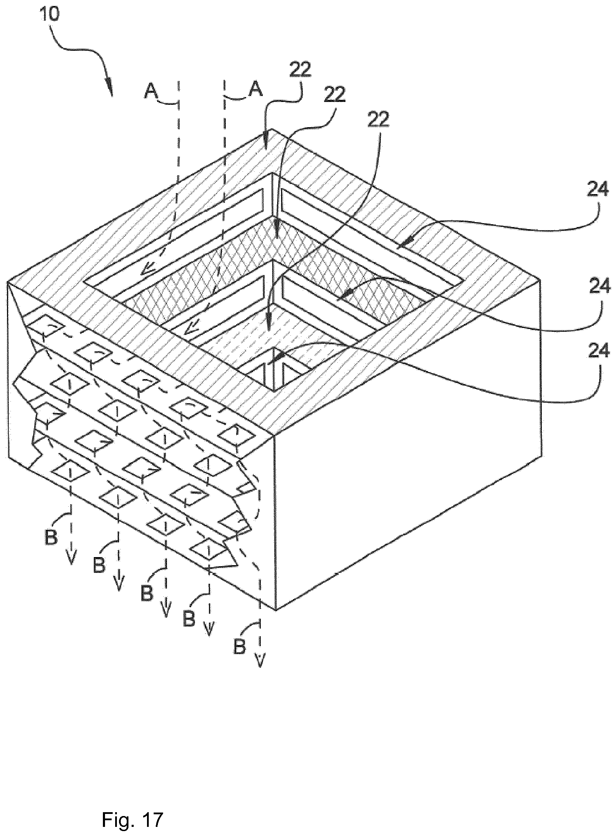

Die Darstellung in Figur 6 ist ausschließlich beispielhaft zu verstehen und gemäß der gezeigten Situation ergibt sich die progressive Struktur exemplarisch durch eine in Richtung des anströmenden Rohgasstroms A von Ebene zu Ebene (und damit von Trennfläche 30 zu Trennfläche 30) zunehmende Anzahl von Öffnungen 32, wobei die einzelnen Öffnungen 32 jeweils von einer Ebene zur darunter liegenden, nächstfolgenden Ebene kleiner werden. Jedenfalls ergibt sich die progressive Struktur durch ein von Ebene zu Ebene unterschiedliches Lochbild. Die progressive Struktur der Trennflächen 30 bewirkt einen in einem Kanal 26 von oben nach unten zunehmenden Strömungswiderstand, also einen progressiv zunehmenden Strömungswiderstand. Eine progressive Struktur ergibt sich auch, wenn gleich große Öffnungen 32 von einer Ebene zur darunter liegenden, nächstfolgenden Ebene versetzt zueinander angeordnet sind (Fig. 17), so dass der Rohgasstrom A nicht ohne Richtungsänderung durch die Öffnungen 32 mehrerer in Strömungsrichtung des Rohgasstroms A aufeinander folgender Trennflächen 30 hindurchströmen kann. Allgemein bezeichnet die progressive Struktur der Trennflächen 30 damit eine Anordnung aufeinander folgender Trennflächen 30, die eine entlang der Tiefe des jeweiligen Kanals 26 zunehmende Verwirbelung des Rohgasstroms A und des mitgeführten Oversprays und aufgrund der Verwirbelung eine entlang der Tiefe des Kanals 26 zunehmende Abscheidung des Oversprays bewirkt.

Dies wird erreicht, indem die Trennflächen 30 des jeweiligen Kanals 26
- von Ebene zu Ebene jeweils kleiner werdende Öffnungen 32 und/oder
- eine von Ebene zu Ebene zunehmende Anzahl von jeweils kleiner werdenden Öffnungen 32 und/oder
- in einer von Ebene zu Ebene versetzten Anordnung jeweils von Ebene zu Ebene gleich große oder von Ebene zu Ebene kleiner werdende Öffnungen 32
aufweisen.

Für das gesamte Abscheidemodul 10 bedeutet dies zweierlei: Zum einen ist der Strömungswiderstand der kürzesten Kanäle 26, also der Strömungswiderstand derjenigen Kanäle 26, welche die geringste Anzahl von Ebenen/Kammern umfassen (in Figur 1 und Figur 3 die ganz außen liegenden Bereiche; in Figur 2 und Figur 4 der im Zentrum liegende Bereich), am geringsten und entsprechend konzentriert sich der Rohgasstrom A bei einem neuen ("frischen") Abscheidemodul 10 zunächst auf diese Bereiche. Zum anderen führt die progressive Struktur der Trennflächen 30 zu einem von Ebene zu Ebene zunehmenden oder zumindest gleichmäßigen oder im Wesentlichen gleichmäßigen Abscheidungsgrad. Dies bewirkt eine gleichmäßige Beladung des Abscheidemoduls 10 mit abgeschiedenem Overspray in vertikaler Richtung (in Richtung der Hauptstromrichtung des Rohgasstroms A) und damit eine optimale Ausnutzung der einzelnen Ebenen und der dortigen Oberflächen. Der unterschiedliche Strömungswiderstand der einzelnen Ebenen und der darin gebildeten Kanäle 26 führt dazu, dass das Abscheidemodul 10 auch in seiner Fläche, nämlich der Fläche quer zum Rohgasstrom A, optimal ausgenutzt wird.

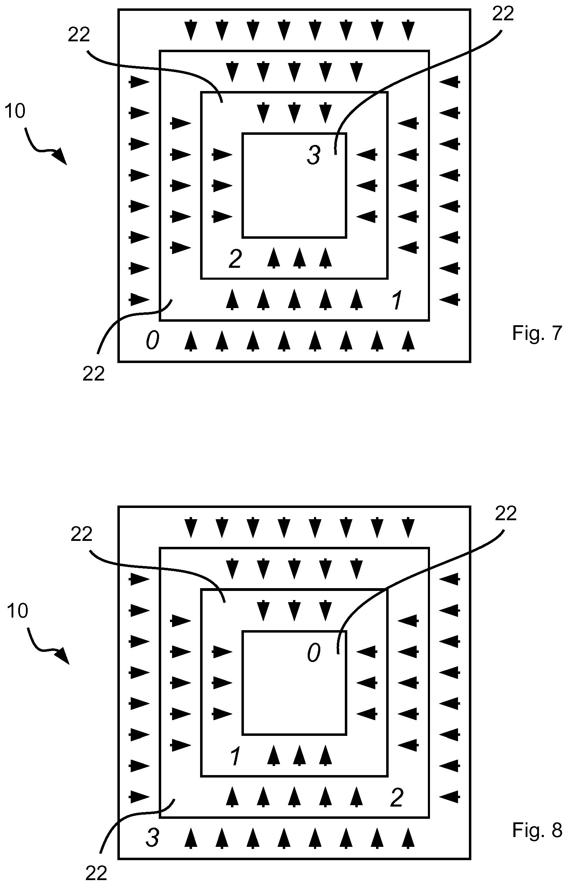

Bei einem Abscheidemodul 10 in Form einer inversen Pyramide (Figur 2, Figur 4) befindet sich ersichtlich der Bereich mit der geringsten Ebenenanzahl (siehe Figur 8) und dem anfänglich geringsten Strömungswiderstand im Zentrum. Indem sich hier aufgrund des relativ geringsten Strömungswiderstands zunächst der Rohgasstrom A konzentriert, findet hier zunächst im Wesentlichen die Abscheidung von mit dem Rohgasstrom A mitgeführtem Overspray statt. Mit zunehmender Abscheidung von Overspray in diesem Bereich steigt dort der Strömungswiderstand (weil sich insbesondere die Öffnungen 32 in der Trennfläche 30 oder den Trennflächen 30 mit der Zeit zusetzen). Damit sinkt die Differenz des Strömungswiderstands in diesem Bereich zu den randseitig unmittelbar angrenzenden Bereichen mit der dortigen höheren Ebenenanzahl. Der Rohgasstrom A verteilt sich mit der Zeit entsprechend dem sich ändernden Strömungswiderstand auch auf diese Bereiche und mit einem zunehmenden, durch diese Bereiche hindurchtretenden Rohgasstrom A findet auch dort eine Abscheidung von Overspray und entsprechend ein Zusetzen insbesondere der dortigen Öffnungen 32 statt. Damit sinkt die Differenz des Strömungswiderstands in diesem Bereich zu dem an diesen randseitig unmittelbar angrenzenden Bereich, wodurch sich der Rohgasstrom A jetzt auch auf diesen Bereich verteilt, in dem dann sukzessive eine Abscheidung von Overspray erfolgt, woraufhin der Strömungswiderstand steigt usw. Für die in Figur 1 und Figur 3 gezeigte Pyramidenform gilt dies entsprechend.

Die Darstellungen in Figur 7 und Figur 8 zeigen das Abscheidemodul 10 gemäß Figur 1 und Figur 3 bzw. Figur 2 und Figur 4 in einer schematisch vereinfachten Ansicht von oben, so dass die Stufen und die resultierenden unterschiedlichen Ebenen der Pyramidenstruktur erkennbar sind. In den beiden Darstellungen sind jeweils mit "0", "1 ", "2" und "3" eine Ebenennummer und die Anzahl der davon jeweils umfassten Ebenen in den entsprechenden Abschnitten des Abscheidemoduls 10 eingetragen. Gemäß Figur 7 befindet sich bei einem Abscheidemodul 10 gemäß Figur 1 und Figur 3 außen die geringste Ebenenanzahl, wobei die Anzahl der Ebenen in Richtung auf das Zentrum zunimmt (Pyramide). Gemäß Figur 8 befindet sich bei einem Abscheidemodul 10 gemäß Figur 2 und Figur 4 innen die geringste Ebenenanzahl, wobei die Anzahl der Ebenen nach außen in alle Richtungen gleichmäßig zunimmt (inverse Pyramide).

Die Darstellungen in Figur 7 und Figur 8 zeigen auch die "ringförmige" Abfolge der jeweils außen liegenden Bereiche der Ebenen. Ersichtlich handelt es sich bei der gezeigten Ausführungsform nicht um Ringe mit kreisförmigen Randlinien, sondern vielmehr um "Ringe" mit vier jeweils aneinander angrenzenden, geraden Kanten. Die Außenkontur der "Ringe" ist damit rechteckig oder quadratisch. Weil die Begriffe "Rechteck" oder "Quadrat" immer auch eine Fläche bezeichnen, was hier nicht im Vordergrund steht, wird im Folgenden die Bezeichnung Ring verwendet, wobei stets mitzulesen ist, dass der Begriff "Ring" hier nicht notwendig eine Form mit kreisförmigen Randlinien meint, sondern ausdrücklich auch von mehreren geraden Randlinien (Polygon; Polygonzug) begrenzte Formen eingeschlossen sind. Zu jedem derartigen Ring gehört ein unter zumindest einzelnen horizontalen Flächen 22 befindlicher und in diesem Sinne in seiner Grundfläche ringförmiger Kanal 26. Die Darstellungen in Figur 7 und Figur 8 komplettieren insoweit die in Figur 5 gezeigte Schnittdarstellung eines Kanals 26 entlang von dessen Hochachse in die dritte Dimension.

Schließlich zeigen die Darstellungen in Figur 7 und Figur 8 auch, dass zumindest einzelne Stufen des Abscheidemoduls 10 umlaufend (bei der gezeigten, bevorzugten Ausführungsform auf allen vier Seiten) im Bereich der jeweiligen vertikalen Flächen 24 vom insoweit umgelenkten Rohgasstrom A angeströmt werden. Dies ist in den Darstellungen mittels der jeweils auf die Randlinien der einzelnen Stufen weisenden Pfeile gezeigt, von denen in der Draufsicht nur deren Oberflächen (horizontale Flächen 22) sichtbar sind. Die den Rohgasstrom A symbolisierenden Pfeile treffen jeweils auf die in der Draufsicht nicht sichtbaren, umlaufenden vertikalen Flächen 24 (Figur 5) der jeweiligen Stufe. Durch die Öffnungen in diesen vertikalen Flächen 24 (zumindest eine Öffnung in jeder vertikalen Fläche 24) gelangt der Rohgasstrom A in den unter zumindest einzelnen Stufen befindlichen Kanal 26 und damit in das Innere des Abscheidemoduls 10. Das Abscheiden von mit dem Rohgasstrom A mitgeführtem Overspray erfolgt im Innern des Abscheidemoduls 10 in den dortigen Kanälen 26, insbesondere an den Trennflächen 30.

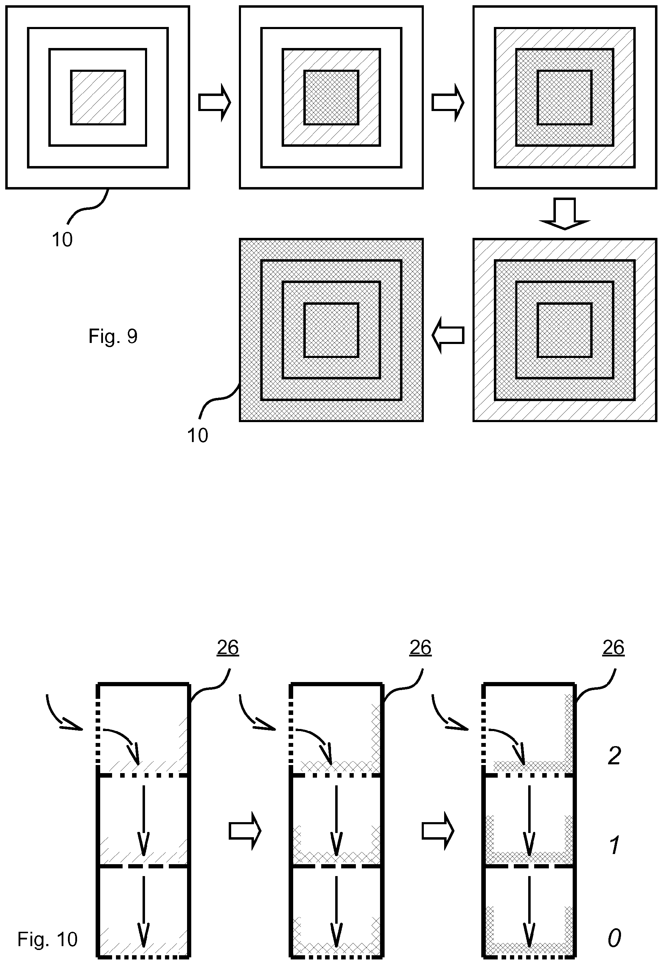

Die Darstellungen in Figur 9 und Figur 10 zeigen schematisch vereinfacht den zeitlichen Verlauf der Beladung eines Abscheidemoduls 10 mit Overspray oder dergleichen bei einer Verwendung zum Beispiel in einer Lackierkabine oder einer Lackierstraße. Die Darstellung basiert auf einem Abscheidemodul 10 gemäß Figur 2 und Figur 4. Für ein Abscheidemodul 10 gemäß Figur 1 und Figur 3 gilt dasselbe entsprechend.

Figur 9 zeigt das Abscheidemodul 10 gemäß Figur 2 und Figur 4 von oben, also wie in Figur 8. Der zeitliche Ablauf der dargestellten Vorgänge folgt den Blockpfeilen, also in der ersten Zeile von links nach rechts und nach dem Übergang zur zweiten Zeile von rechts nach links. Zunächst (links oben) wird aufgrund des dortigen relativ geringsten Strömungswiderstands der innere (zentrale) Bereich mit der geringsten Ebenenanzahl beladen. Dies ist durch die einfache diagonale Schraffur ausgedrückt. Sobald dort der Strömungswiderstand aufgrund einer entsprechenden Beladung deutlich erhöht ist, beginnt auch die Beladung des angrenzenden Bereichs (oben, Mitte) und in dem inneren Bereich findet keine weitere Beladung oder kaum noch weitere Beladung statt. Ein beladener oder im Wesentlichen beladener Bereich ist durch die doppelte Schraffur gekennzeichnet. Nachdem auch in dem an den inneren Bereich angrenzenden Bereich der Strömungswiderstand aufgrund der erfolgten Beladung nennenswert angestiegen ist, beginnt die Beladung des nächstfolgenden angrenzenden Bereichs (rechts oben). Dies setzt sich sukzessive fort (rechts unten), bis schließlich das Abscheidemodul 10 in seiner gesamten dem Rohgasstrom A zugewandten Fläche beladen ist.

Wenn man die in Figur 9 veranschaulichten Vorgänge als "Beladung in der Fläche" bezeichnen will, zeigt Figur 10 die "Beladung des Abscheidemoduls 10 in der Tiefe", also den Verlauf der Beladung in vertikaler Richtung (parallel zur Hauptströmungsrichtung des Rohgasstroms A). Die Erläuterung dazu erfolgt anhand eines mehrere Ebenen des Abscheidemoduls 10 umfassenden Kanals 26. Dafür wird im Wesentlichen die Darstellung aus Figur 5 wiederholt. Der dortige Kanal 26 umfasst drei Ebenen (Ebene "0", Ebene "1" und Ebene "2"). Aufgrund der progressiven Struktur der Trennflächen 30 (in Figur 10 durch unterschiedliche Linienarten veranschaulicht) erfolgt eine Abscheidung des von dem Rohgasstrom A mitgeführten Oversprays an allen Trennflächen 30 gleichzeitig. Der in den Kanal 26 eintretende Rohgasstrom A wird aufgrund der Umlenkung an der vertikalen Fläche 24 verwirbelt und die Verwirbelung sorgt für eine Abscheidung an den Innenflächen der an die vertikale Fläche 24 angrenzenden Kammer. Eine erste (oberste) Trennfläche 30 (in der Darstellung in Figur 10 Ebene "2") lässt aufgrund der Anzahl und der Form der darin gebildeten Öffnungen 32 einen vergleichsweise großen Teil des Rohgasstroms A im Wesentlichen ungehindert passieren und die Öffnungen 32 führen zu einer nur geringen zusätzlichen Verwirbelung des Rohgassstroms A. Entsprechend wird hier nur ein vergleichsweise geringer Overspray-Anteil abgeschieden. Gleichwohl findet eine Abscheidung statt und die Menge an von dem Rohgasstrom A mitgeführtem Overspray ist bei der nächsten Ebene (in der Darstellung in Figur 10 Ebene "1") bereits reduziert. Die progressive Struktur der in vertikaler Richtung innerhalb eines Kanals 26 aufeinanderfolgenden Trennflächen 30 ist hier zum Beispiel in Form einer Trennfläche 30 mit kleineren Öffnungen 32 sowie einer erhöhten Anzahl solcher kleineren Öffnungen 32 realisiert (versetzte Öffnungen führen zu einer zusätzlichen Verwirbelung). Durch die Öffnungen 32 gelangt der Rohgasstrom A zur nächstniedrigeren Ebene. Vorher findet hier eine Abscheidung eines weiteren Teils des von dem Rohgasstrom A mitgeführten Oversprays statt, wobei der Rohgasstrom A aufgrund der progressiven Struktur der Trennflächen 30 hier stärker als in der vorangehenden Ebene verwirbelt wird. Die in der Darstellung in Figur 10 in der letzten Ebene (Ebene "0") noch ankommende, vom Rohgasstrom A mitgeführte Overspray-Menge ist also noch weiter reduziert. Hier erfolgt eine nochmalige Abscheidung von Overspray an der Trennfläche 30 dieser Ebene. Bei der Trennfläche 30 der letzten Ebene jedes Kanals 26 ist die progressive Struktur der in vertikaler Richtung innerhalb eines Kanals 26 aufeinanderfolgenden Trennflächen 30 zum Beispiel in Form einer Trennfläche 30 mit den entlang des Kanals 26 kleinsten Öffnungen 32 und der höchsten Anzahl solcher Öffnungen 32 realisiert. Damit ist gewährleistet, dass in der letzten Ebene vom Rohgasstrom A (noch) mitgeführtes Overspray an dieser Trennfläche 30 abgeschieden oder zumindest im Wesentlichen abgeschieden wird, so dass die am unteren Ende des Kanals 26 austretende Luft frei von Overspray oder zumindest im Wesentlichen frei von Overspray ist.

In der Darstellung in Figur 10 ist insoweit veranschaulicht, dass in jeder Ebene eine Abscheidung von Overspray erfolgt (durch eine Schraffur oberhalb der Trennflächen 30 des dargestellten Kanals 26 gezeigt). Darüber hinaus ist gezeigt, dass die an den einzelnen Trennflächen 30 abgeschiedene Overspray-Menge mit der Zeit zunimmt, wobei dies von links nach rechts durch unterschiedliche Schraffuren veranschaulicht ist (Figur 10, links: anfängliche Beladung; Figur 10, Mitte: zunehmende Beladung; Figur 10, rechts: endgültige Beladung). Durch die Darstellung in Figur 10 und die gezeigte zeitliche Abfolge der resultierenden Beladung eines Kanals 26 des Abscheidemoduls 10 mit Overspray wird deutlich, dass das Abscheidemodul 10 auch in vertikaler Richtung (also "in der Tiefe") eine gleichmäßige Beladung mit Overspray erfährt und sich damit insgesamt (gleichmäßige Beladung in der Fläche; gleichmäßige Beladung in der Tiefe) durch eine hervorragende Abscheideleistung und eine damit einhergehende hohe Standzeit auszeichnet.

Das Abscheidemodul 10 ist zum Beispiel aus Wellpappe gefertigt, wobei die einzelnen Flächen 22, 24, 28, 30 durch entsprechende Formgebung einzelner oder mehrerer Wellpappenabschnitte angelegt sind.

Das bisher beschriebene Abscheidemodul 10 umfasst einen zum Beispiel ebenfalls aus Wellpappe gefertigten Rahmen oder wird in einen Rahmen eingesetzt, welcher dieses formschlüssig umgibt, wie dies zum Beispiel in Figur 1 und Figur 2 gezeigt ist. Ein Abscheidemodul 10 in Form einer Pyramide (Figur 1) wird zum Beispiel bevorzugt formschlüssig in einen separaten Rahmen eingesetzt. Bei einem Abscheidemodul 10 in Form einer inversen Pyramide (Figur 2) bilden bei einer bevorzugten Ausführungsform die äußeren Grenzflächen 28 einen solchen Rahmen, so dass ein separater Rahmen nicht notwendig ist, gleichwohl aber durchaus vorhanden sein kann. In einer Kombination mit einem eigenen oder einem separaten Rahmen ist das bisher beschriebene Abscheidemodul 10 das Innenteil und ein eventuell separater Rahmen das Außenteil einer Vorrichtung, die auch insgesamt als Abscheidemodul 10 bezeichnet werden kann.

Ein Abscheidemodul 10 der hier beschriebenen Art wird bevorzugt (mit oder ohne eigenem oder separatem Rahmen/Außenteil) in einer hier nicht gezeigten Vorrichtung zum Abscheiden von Overspray verwendet. Eine solche Vorrichtung ist zum Beispiel eine Vorrichtung, wie sie in der WO 2016/116393 A beschrieben ist, oder eine Vorrichtung mit insbesondere in einer Ebene ("Modulwand") neben- und/oder übereinander platzierten Fächern zur Aufnahme jeweils eines Abscheidemoduls 10.

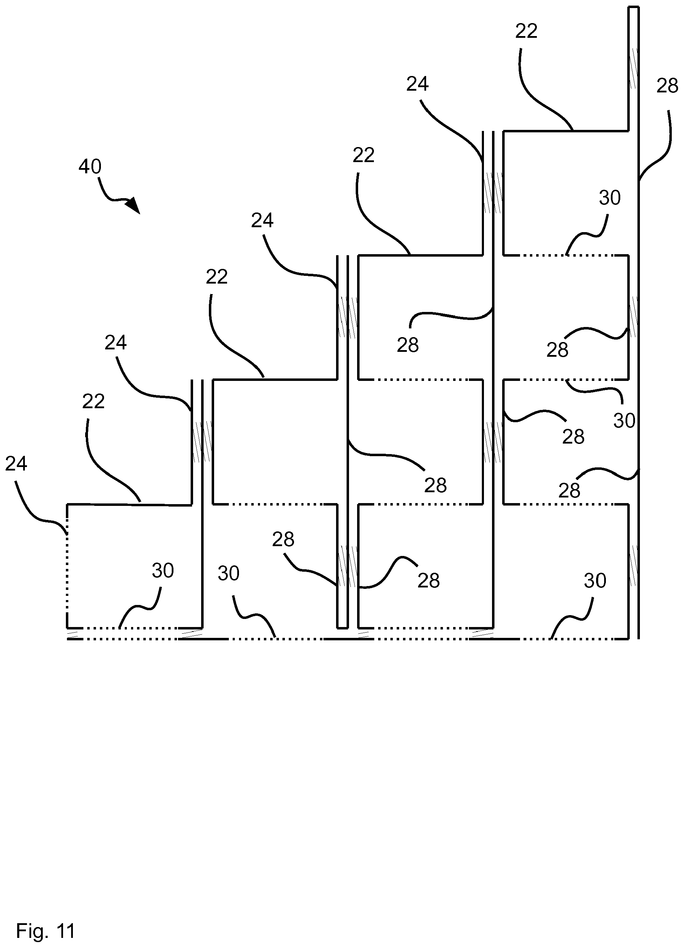

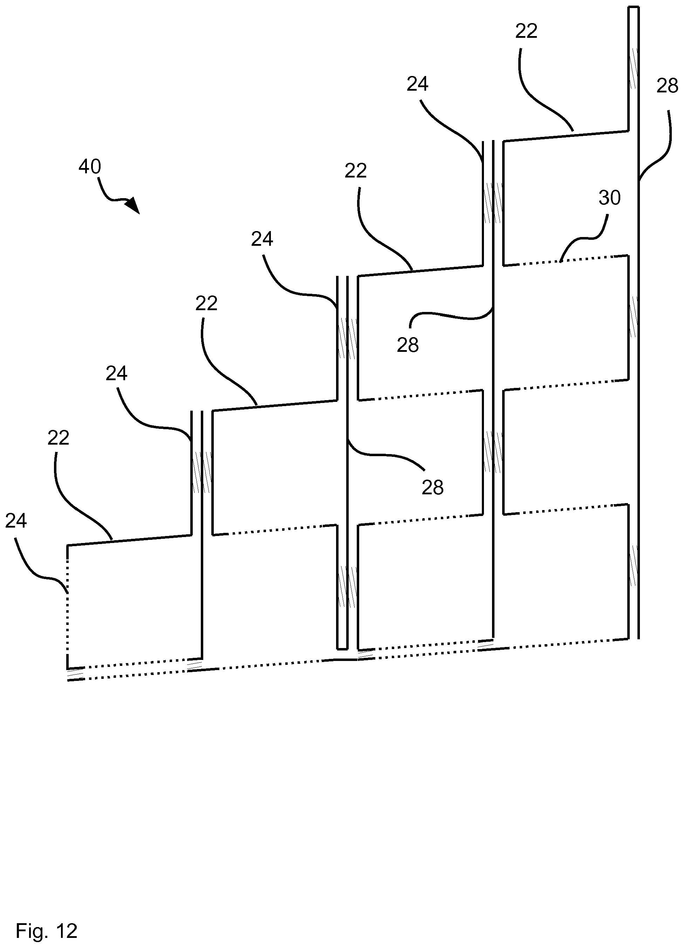

Die Darstellungen in Figur 11 und Figur 12 zeigen einen Schnitt durch eines der vier Segmente 40 eines Abscheidemoduls 10 gemäß Figur 2 mit einer Schnittebene wie in Figur 4, also mit einer Schnittebene entlang einer der Symmetrieachsen des Abscheidemoduls 10. Gezeigt werden soll, dass sich ein zum Beispiel aus Pappe, insbesondere Wellpappe, gefertigtes Abscheidemodul 10 zum Transport auf kleinsten Raum zusammenlegen lässt und bei der Vorbereitung für den Einsatz "selbstaufstellend" ist.

Dafür ist in Figur 11 zunächst eine mögliche Ausführungsform eines Segments 40 des Abscheidemoduls 10 mit einzelnen mehrfach gefalteten Materialbahnen (zum Beispiel Pappe, insbesondere Wellpappe) gezeigt. Für die weiteren Segmente 40 des Abscheidemoduls 10 gilt dieser Aufbau entsprechend. Die Materialbahnen sind in Form durchgehender Linienzüge dargestellt. Dadurch soll auch veranschaulicht werden, dass die Segmente 40 aus mehrfach gefalteten, durchgehenden Materialbahnen hergestellt sein können.

Auf eine Bezeichnung sämtlicher Flächen mit Bezugsziffern wurde im Interesse der Übersichtlichkeit verzichtet (genauso in Figur 12). Insoweit wird auf die vorangehenden Figuren 1 bis 10 verwiesen. Nicht dargestellt ist außerdem die jeweils zumindest eine Öffnung in den vertikalen Flächen 24.

In Form jeweils schraffierter Bereiche zwischen einzelnen Abschnitten der Materialbahnen sind Befestigungspunkte gezeigt, an denen die Materialbahnen zum Beispiel durch Verkleben, Vernähen, Heftklammern oder dergleichen miteinander verbunden sind. Dabei ist darauf hinzuweisen, dass eine solche Verbindung nicht entlang der gesamten Tiefe (quer zur Achse des Blattes mit der Darstellung) des jeweiligen Segments 40 bestehen muss und es vielmehr durchaus ausreichend ist, wenn eine solche Verbindung im Bereich der Seiten des jeweiligen Segments 40 besteht, also in den Bereichen, in denen bei einem vollständigen Abscheidemodul 10 ein Segment 40 jeweils an ein benachbartes Segment 40 anschließt.

Figur 11 zeigt den Schnitt durch das Segment 40 des Abscheidemoduls 10 im gebrauchsfertigen ("aufgefalteten") Zustand. Zwischen den einzelnen Flächenabschnitten (horizontale Fläche 22, vertikale Fläche 24, Trennfläche 30, Grenzfläche 28) besteht jeweils entsprechend der gestuften Oberflächenstruktur ein rechter Winkel (90°) oder zumindest im Wesentlichen ein rechter Winkel. Alle diejenigen Stellen, an denen innerhalb eines Segments 40 des Abscheidemoduls 10 zwei Flächenabschnitte unter einem solchen Winkel aufeinandertreffen, fungieren beim Zusammenlegen des jeweiligen Segments 40 und genauso beim Aufbau des Abscheidemoduls 10 wie ein Scharnier (Filmscharnier). Die Gesamtheit der äußeren Grenzflächen 28 bildet zum Beispiel eine Außenwand des Abscheidemoduls 10 und die Gesamtheit der äußeren (untersten) Trennflächen 30 bildet zum Beispiel eine laschenartige Bodenfläche des Abscheidemoduls 10.

Die Darstellung in Figur 12 zeigt das Segment 40 aus Figur 11 in einer Momentaufnahme beim Zusammenlegen. Ersichtlich sind alle zuvor (Figur 11) horizontalen Flächen 22, 30 gegen die Horizontale geneigt, während die zuvor vertikalen Flächen 28 vertikal oder zumindest im Wesentlichen vertikal bleiben. Es ist leicht vorstellbar, dass sich beim weiteren Zusammenlegen des Segments 40, also bei Zusammenlegen über die in Figur 12 gezeigte Neigung hinaus, eine zunehmend flachere Gesamtstruktur ergibt, bis schließlich die zuvor (Figur 11) horizontalen Flächen 22, 30 vertikal oder im Wesentlichen vertikal orientiert sind und zum Beispiel alle Flächen 22 mit den angrenzenden Flächen 24 fluchten (in einer Ebene oder zumindest im Wesentlichen in einer Ebene liegen).

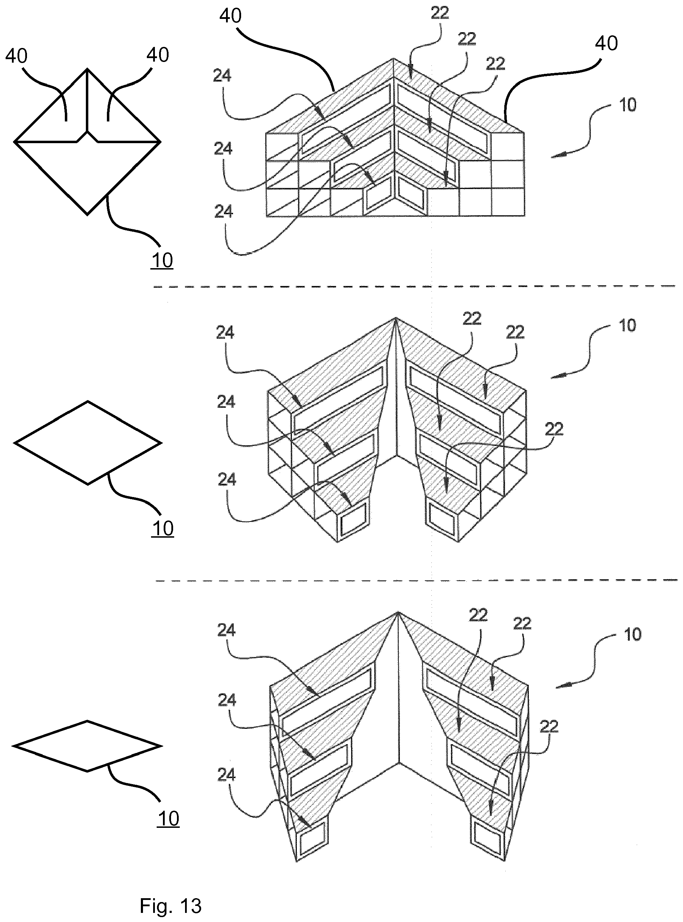

Die Darstellung in Figur 13 zeigt ein von einer Ecke zur gegenüberliegenden Ecke geteiltes Abscheidemodul 10 gemäß Figur 2 und von oben nach unten in einer dreidimensionalen Darstellung den Ablauf beim Zusammenlegen eines Abscheidemoduls 10. Links neben jeder Darstellung ist jeweils in einer schematisch vereinfachten zweidimensionalen Darstellung zur Orientierung eine Draufsicht auf das Abscheidemodul 10 gezeigt, wobei in Figur 13 oben in dieser Draufsicht zusätzlich auch die beiden Segmente 40 dargestellt sind.

Zunächst (Figur 13, oben) sind die beiden gezeigten Segmente 40 "aufgefaltet" und es ergeben sich die gestufte Oberflächenstruktur mit rechten oder annähernd rechten Winkeln zwischen den einzelnen Flächen sowie eine quadratische oder zumindest rechteckige Grundfläche des Abscheidemoduls 10.

Darunter (Figur 13, Mitte) wird das Abscheidemodul 10 mit seiner würfelförmigen oder quaderförmigen Hüllkontur zusammengefaltet. Anstelle der zuvor (Figur 13, oben) quadratisch gezeigten Grundfläche ergibt sich beim Zusammenfalten eine zunehmend rhombische Grundfläche, indem zwei der einander gegenüberliegenden Ecken des Abscheidemoduls 10 beim Zusammenfalten aufeinander zu bewegt werden (das Abscheidemodul 10 wird durch Druck auf zwei einander gegenüberliegende Ecken zusammengedrückt, eventuell unterstützt durch einen Druck auf die stufenförmige Oberflächenstruktur einzelner Segmente 40 oder einen Zug an der laschenartigen Bodenfläche einzelner Segmente 40). Dabei ergibt sich auch ein zunehmendes Zusammenfalten der einzelnen Segmente 40, wie dies in Figur 12 gezeigt ist.

Durch weiteres Zusammendrücken (Figur 13, unten) wird das Abscheidemodul 10 immer flacher und die einzelnen Segmente 40 werden immer weiter zusammengefaltet. In dieser flach zusammengelegten Form kann das Abscheidemodul 10 äußerst platzsparend transportiert werden und wird erst am Einsatzort in die für den Einsatz notwendige Form (wie in den vorangehenden Figuren 1 bis 10 gezeigt) gebracht.

Beim Aufbau eines Abscheidemoduls 10 ergibt sich der in Figur 13 sowie Figur 11 und Figur 12 veranschaulichte Ablauf in umgekehrter Reihenfolge. Bei einem zusammengefalteten Abscheidemodul 10 werden dessen am weitesten voneinander entfernte Ecken aufeinander zu bewegt. Dadurch ergibt sich ausgehend von einem zusammengefalteten Abscheidemodul 10 mit einer zunächst rhombischen Grundfläche ein zunehmend aufgefaltetes Abscheidemodul 10 mit einer zunehmend quadratischen oder rechteckigen Grundfläche. Durch einen Druck auf die Bodenflächen der einzelnen Segmente 40 werden auch diese aufgefaltet, so dass sich schließlich die in Figur 11 gezeigte Konfiguration ergibt. Am Ende des Auffaltens steht eine Konfiguration, wie sie in Figur 2 gezeigt ist. Dies wird als eine selbstaufstellende Struktur des Abscheidemoduls 10 bezeichnet. Die Eigenschaft des Selbstaufstellens kann noch verstärkt werden, wenn jeweils zwei Segmente 40 randseitig (also in dem Bereich, in dem ein Segment 40 an ein benachbartes Segment 40 angrenzt) zumindest stellenweise miteinander verbunden sind. Dann ziehen sich die Segmente 40 gewissermaßen miteinander in die Höhe (oder beim Zusammenlegen in die Tiefe), wenn bei dem zusammengefalteten Abscheidemodul 10 die beiden am weitesten voneinander entfernten Ecken aufeinander zu bewegt werden.

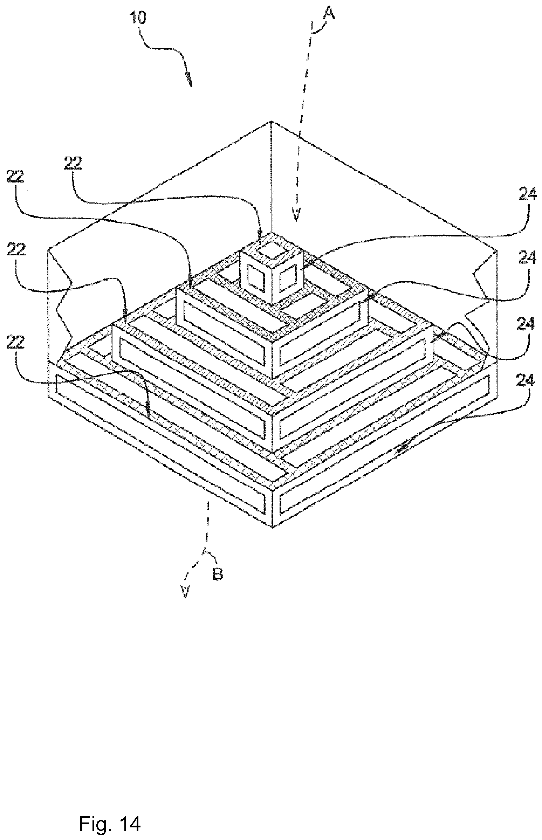

Die Darstellung in Figur 14 zeigt ein Abscheidemodul 10 ähnlich wie in Figur 1, wobei die horizontalen Flächen 22 und die vertikalen Flächen 24 Öffnungen für einen Eintritt des Rohgasstroms A in das Innere des Abscheidemoduls 10 aufweisen. Die Öffnungen sind als langgestreckte (rechteckige), durchgehende Öffnungen gezeigt. Anstelle solcher durchgehender Öffnungen können - und dies gilt ebenso für die nachfolgenden Darstellungen - auch eine Mehrzahl einzelner Öffnungen, insbesondere eine von Ebene zu Ebene abnehmende oder zunehmende Anzahl von Öffnungen, vorgesehen sein.

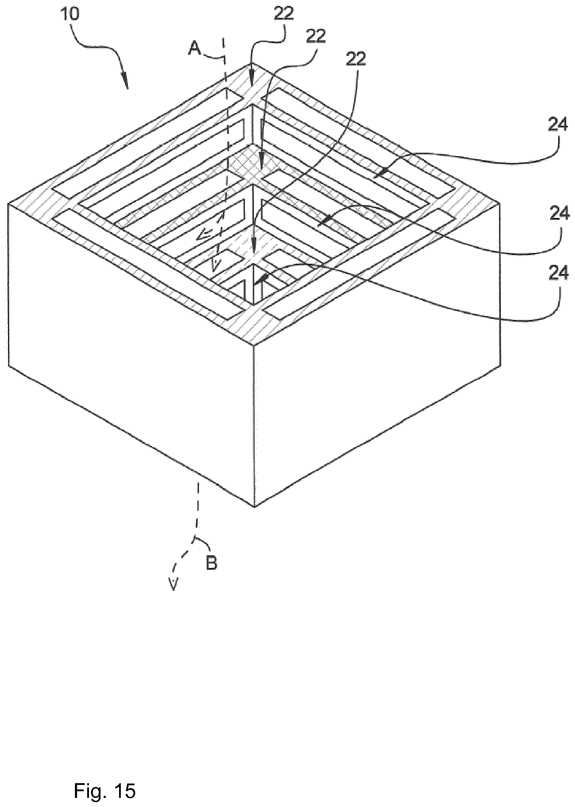

Die Darstellung in Figur 15 zeigt ein Abscheidemodul 10 ähnlich wie in Figur 2, wobei die horizontalen Flächen 22 und die vertikalen Flächen 24 Öffnungen für einen Eintritt des Rohgasstroms A in das Innere des Abscheidemoduls 10 aufweisen.

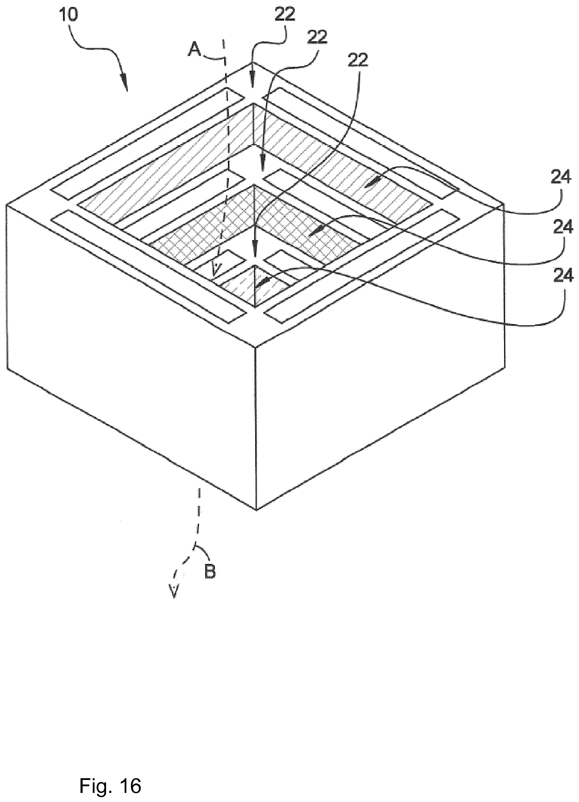

Die Darstellung in Figur 16 zeigt ein Abscheidemodul 10 ähnlich wie in Figur 2, wobei nur die horizontalen Flächen 22 Öffnungen für einen Eintritt des Rohgasstroms A in das Innere des Abscheidemoduls 10 aufweisen.

Die Darstellung in Figur 17 zeigt ein Abscheidemodul 10 ähnlich wie in Figur 2 mit in vertikaler Richtung versetzt zueinander angeordneten Öffnungen 32 in den Trennflächen 30 und die daraus resultierende mehrfache Umlenkung des Rohgasstroms A im Innern des Abscheidemoduls 10. Im Gegensatz dazu war in Figur 2 eine Ausführungsform mit von Ebene zu Ebene kleiner werdenden Öffnungen 32 in den Trennflächen 30 gezeigt. Beides stellt eine progressive Struktur der Trennflächen 30 dar. Beide Varianten können miteinander kombiniert werden. Alle diese Varianten der progessiven Struktur gelten selbstverständlich auch für die Ausführungsform des Abscheidemoduls 10 gemäß Figur 1.

Einzelne im Vordergrund stehende Aspekte der hier eingereichten Beschreibung lassen sich damit kurz wie folgt zusammenfassen: Angegeben werden ein Abscheidemodul 10 mit einer gestuften Oberflächenstruktur, wobei bei der gestuften Oberflächenstruktur zu jeder Stufe jeweils eine horizontale Fläche 22 gehört und wobei an die horizontalen Flächen 22 jeweils zumindest eine vertikale Fläche 24 angrenzt, wobei eine zwischen zwei horizontalen Flächen 22 befindliche vertikale Fläche 24 zumindest eine Öffnung zum Eintritt eines mit Overspray beladenen Rohgasstroms A in das Innere des Abscheidemoduls 10 aufweist, wobei das Abscheidemodul 10 im Anschluss an eine mit zumindest einer Öffnung versehene vertikale Fläche 24 im Innern unter einzelnen horizontalen Flächen 22 vertikale Kanäle 26 aufweist und wobei zumindest einzelne Kanäle 26 eine Mehrzahl von durch Trennflächen 30 mit einer progressiven Struktur separierte Kammern umfassen, sowie eine Verwendung eines solchen Abscheidemoduls 10, zum Beispiel in einer Vorrichtung zum Abscheiden von sogenanntem Overspray.

### Bezugszeichenliste

- 10: Abscheidemodul
- 22: horizontale Fläche
- 24: vertikale Fläche
- 26: Kanal
- 28: vertikale Grenzfläche
- 30: Trennfläche
- 32: Öffnung (in der Trennfläche)
- 40: Segment (des Abscheidemoduls)

## Patentansprüche

1. Abscheidemodul (10) mit einer gestuften Oberflächenstruktur,
wobei bei der gestuften Oberflächenstruktur zu jeder Stufe jeweils eine horizontale Fläche (22) gehört und wobei an die horizontalen Flächen (22) jeweils zumindest eine vertikale Fläche (24) angrenzt,
wobei eine zwischen zwei horizontalen Flächen (22) befindliche vertikale Fläche (24) zumindest eine Öffnung zum Eintritt eines mit Overspray beladenen Rohgasstroms in das Innere des Abscheidemoduls (10) aufweist,
wobei das Abscheidemodul (10) im Anschluss an eine mit zumindest einer Öffnung versehene vertikale Fläche (24) im Innern unter einzelnen horizontalen Flächen (22) eine Mehrzahl von vertikalen Kanälen (26) mit einer von Stufe zu Stufe unterschiedlichen Tiefe und entsprechend einer von Stufe zu Stufe unterschiedlichen Anzahl von Kammern sowie entsprechend einer von Stufe zu Stufe unterschiedlichen Anzahl von Trennflächen (30) aufweist,
wobei zumindest einzelne Kanäle (26) eine Mehrzahl von durch Trennflächen (30) mit einer progressiven Struktur separierte Kammern umfassen,
wobei zumindest einzelne Kanäle (26) im Innern des Abscheidemoduls (10) gegen benachbarte Kanäle (26) mittels geschlossener vertikaler Grenzflächen (28) abgegrenzt sind,
wobei das Abscheidemodul (10) auf mehreren, zu jeweils einer Stufe gehörenden Ebenen jeweils eine mit zumindest einer Öffnung versehene vertikale Fläche (24) aufweist und
wobei das Abscheidemodul (10) zumindest einen ersten und einen zweiten in seiner Grundfläche ringförmigen Kanal (26) umfasst,
wobei der erste und der zweite Kanal (26) einen gemeinsamen Mittelpunkt einschließen,
wobei zum ersten und zum zweiten Kanal (26) jeweils eine den Kanal (26) in Anströmrichtung begrenzende horizontale Fläche (22) gehört und
wobei die horizontale Fläche (22) des ersten Kanals (26) und die horizontale Fläche des zweiten Kanals (26) zu unterschiedlichen Stufen der gestuften Oberflächenstruktur gehören.

2. Abscheidemodul (10) nach Anspruch 1, mit mehreren Stufen mit jeweils umlaufenden jeweils mit zumindest einer Öffnung versehenen vertikalen Flächen (24).

3. Abscheidemodul (10) nach einem der vorangehenden Ansprüche, mit einem die gestufte Oberflächenstruktur bildenden Innenteil und einem das Innenteil rahmenartig einfassenden Außenteil.

4. Abscheidemodul (10) nach Anspruch 3, wobei das Innenteil die horizontalen Flächen (22), die vertikalen Flächen (24) und die Trennflächen (30) umfasst.

5. Abscheidemodul (10) nach Anspruch 4, wobei das Innenteil aus Pappe, insbesondere Wellpappe, gefertigt ist.

6. Abscheidemodul (10) nach Anspruch 3, 4 oder 5, mit einem faltbaren, selbstaufstellenden Innenteil.

7. Abscheidemodul (10) nach einem der Ansprüche 3 bis 6, wobei die gestufte Oberflächenstruktur aufgrund eines Innenteils in Form einer Stufenpyramide resultiert.

8. Abscheidemodul (10) nach einem der Ansprüche 3 bis 6, wobei die gestufte Oberflächenstruktur aufgrund eines Innenteils in Form einer inversen Stufenpyramide resultiert.

9. Vorrichtung zum Abscheiden von Overspray mit zumindest einem Abscheidemodul (10) nach einem der vorangehenden Ansprüche.

10. Vorrichtung nach Anspruch 9 mit einer Mehrzahl von nebeneinander und übereinander platzierten und dabei jeweils mit der gestuften Oberflächenstruktur in Richtung eines anströmenden Rohgasstroms weisenden Abscheidemodulen (10).

## Claims

1. Separation module (10) having a stepped surface structure,
wherein in the stepped surface structure each step has a horizontal face (22) and wherein at least one vertical face (24) adjoins each of the horizontal faces (22),
wherein a vertical face (24) located between two horizontal faces (22) has at least one opening for the entry of a raw gas flow loaded with overspray into the interior of the separation module (10),
wherein the separation module (10) comprises, following a vertical face (24) provided with at least one opening, a plurality of vertical channels (26) under individual horizontal faces (22) in the interior, the channels having a depth that varies from step to step and correspondingly a number of chambers that varies from step to step as well as correspondingly a number of separating faces (30) that varies from step to step,
wherein at least individual channels (26) have a plurality of chambers separated by separating faces (30) having a progressive structure,
wherein at least individual channels (26) in the interior of the separation module (10) are delimited from adjacent channels (26) by means of closed vertical interfaces (28), wherein the separation module (10) comprises, on each of a plurality of levels each belonging to a step, a vertical face (24) provided with at least one opening,
and wherein the separation module (10) comprises at least one first and one second channel (26) having an annular base surface,
wherein the first and the second channel (26) contain a common center point,
wherein the first and the second channel (26) each have a horizontal face (22) delimiting the channel (26) in the direction of flow and
wherein the horizontal face (22) of the first channel (26) and the horizontal face of the second channel (26) belong to different steps of the stepped surface structure.

2. Separation module (10) according to claim 1, comprising a plurality of steps which each have peripheral vertical faces (24) each provided with at least one opening.

3. Separation module (10) according to either of the preceding claims, comprising an inner part forming the stepped surface structure and an outer part enclosing the inner part in the manner of a frame.

4. Separation module (10) according to claim 3, wherein the inner part comprises the horizontal faces (22), the vertical faces (24) and the separating faces (30).

5. Separation module (10) according to claim 4, wherein the inner part is made of cardboard, in particular corrugated cardboard.

6. Separation module (10) according to claim 3, claim 4 or claim 5, comprising a foldable, self-erecting inner part.

7. Separation module (10) according to any of claims 3 to 6, wherein the stepped surface structure results due to an inner part in the shape of a stepped pyramid.

8. Separation module (10) according to any of claims 3 to 6, wherein the stepped surface structure results due to an inner part in the shape of an inverse stepped pyramid.

9. Device for separating overspray by means of at least one separation module (10) according to any of the preceding claims.

10. Device according to claim 9, comprising a plurality of separation modules (10) which are arranged side by side and one above the other, with each stepped surface structure of said modules facing toward an incoming raw gas flow.

## Revendications

1. Module de séparation (10) présentant une structure de surface étagée,
dans lequel une surface horizontale (22) appartient respectivement à chaque étage dans la structure de surface étagée, et dans lequel au moins une surface verticale (24) est respectivement adjacente aux surfaces horizontales (22),
dans lequel une surface verticale (24) se trouvant entre deux surfaces horizontales (22) comporte au moins une ouverture pour l'entrée d'un flux de gaz brut chargé d'excès de projection à l'intérieur du module de séparation (10),
dans lequel le module de séparation (10) comporte une pluralité de conduits (26) verticaux dans le prolongement d'une surface verticale (24) dotée d'au moins une ouverture à l'intérieur en dessous de surfaces horizontales (22) individuelles comportant une profondeur variant d'un étage à l'autre et en fonction d'un certain nombre de chambres variant d'un étage à l'autre et en fonction d'un certain nombre de surfaces de séparation (30) variant d'un étage à l'autre,
dans lequel au moins des conduits (26) individuels comprennent une pluralité de chambres séparées par des surfaces de séparation (30) présentant une structure progressive,
dans lequel au moins des conduits (26) individuels sont séparés des conduits (26) adjacents à l'intérieur du module de séparation (10) au moyen de surfaces de délimitation verticales (28) fermées,
dans lequel le module de séparation (10) comporte une surface verticale (24) dotée d'au moins une ouverture sur plusieurs niveaux appartenant respectivement à un étage respectif,
et dans lequel le module de séparation (10) comprend au moins un premier et un second conduit (26) annulaire dans sa surface de base,
dans lequel le premier et le second conduit (26) comprennent un centre commun,
dans lequel une surface horizontale (22) délimitant le conduit (26) dans la direction d'entrée appartient respectivement au premier et au second conduit (26),
et dans lequel la surface horizontale (22) du premier conduit (26) et la surface horizontale du second conduit (26) appartiennent à des étages différents de la structure de surface étagée.

2. Module de séparation (10) selon la revendication 1, comportant plusieurs étages ayant chacun des surfaces verticales (24) circonférentielles dotées chacune d'au moins une ouverture.

3. Module de séparation (10) selon l'une des revendications précédentes, comportant une partie intérieure formant la structure de surface étagée et une partie extérieure entourant la partie intérieure sous forme de cadre.

4. Module de séparation (10) selon la revendication 3, dans lequel la partie intérieure comprend les surfaces horizontales (22), les surfaces verticales (24) et les surfaces de séparation (30).

5. Module de séparation (10) selon la revendication 4, dans lequel la partie intérieure est en carton, en particulier en carton ondulé.

6. Module de séparation (10) selon la revendication 3, 4 ou 5, comportant une partie intérieure pliable et à montage automatique.

7. Module de séparation (10) selon l'une des revendications 3 à 6, dans lequel la structure de surface étagée donne la forme d'une pyramide étagée en raison d'une partie intérieure.

8. Module de séparation (10) selon l'une des revendications 3 à 6, dans lequel la structure de surface étagée donne la forme d'une pyramide étagée inversée en raison d'une partie intérieure.

9. Dispositif servant à séparer un excès de projection comportant au moins un module de séparation (10) selon l'une des revendications précédentes.

10. Dispositif selon la revendication 9, comprenant une pluralité de modules de séparation (10) placés les uns à côté des autres et les uns au-dessus des autres, présentant respectivement une structure de surface étagée orientée dans la direction d'un flux de gaz brut entrant.
